# EUROPEAN PATENT SPECIFICATION

(11) **EP 0 653 694 B1**
(45) Date of publication and mention of the grant of the patent: **21.01.1998**
(21) Application number: 94306297.6
(22) Date of filing: 25.08.1994
(51) Int. Cl.: B60T 7/06, G05G 1/16, B60K 26/02

(54) **Pedals for automobiles**
Pedale für Autos
Pédales pour automobiles

(30) Priority: 12.11.1993 KR 9323754
(43) Date of publication of application: 17.05.1995
(73) Proprietor: Song, Young-Ryeol, Anyang-City, Kyungki-Do (KR)
(72) Inventor: Song, Young-Ryeol, Anyang-City, Kyungki-Do (KR)
(74) Representative: Stanley, David William

(56) References cited:
- EP-A- 0 393 974
- EP-A- 0 402 603
- DE-A- 4 136 747
- FR-A- 1 388 210
- FR-A- 2 407 093
- US-A- 2 931 246
- US-A- 3 301 088
- US-A- 3 691 868
- US-A- 4 875 385

## Description

The present invention relates to pedals for automobiles as specified in the preamble of claim 1. Such pedals are well-known.

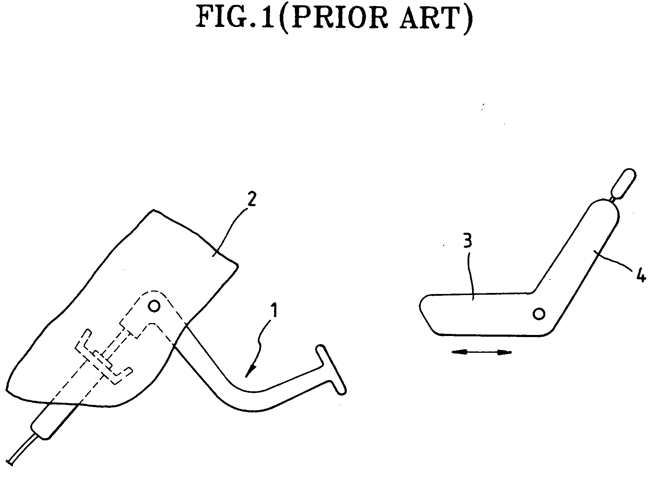

Automobiles are ordinarily equipped with foot operated pedals such as an accelerator, clutch and brake, Referring to Figure 1 of the accompanying diagrammatic drawings, showing the general relationship between a conventional pedal and a car seat, a pedal 1 having a predetermined length is hinged to a plate 2. Here, in order to facilitate pedal operation when seated on a driver's seat 3 having a seat back 4, the operator (driver) adjusts the seat forward or backward according to the driver's height, or more specifically, according to the length of the driver's legs.

However, when a very short-legged driver drives with driver's seat 3 pulled completely forward, certain inconveniences and/or problems follow. First, when the driver uses a side mirror or rear-view mirror, his of her head is in an awkwardly contorted position, making it difficult to simultaneously observe forward and side areas, which is unsafe. Second, since the driver is thus positioned uncomfortably close to the steering wheel, proper wheel operation is difficult. Third, when the driver operates the pedal, the leg's articulate angle is almost rectangular so that easy operation of the automobile is hindered.

On the other hand, if the driver chooses to drive with driver's seat 3 pushed too far back for the length of his or her legs, the driver operates the pedals with his or her legs overly extended, which quickens leg fatigue during long trips. In an attempt to remedy this situation, drivers often fix driver's seat 3 at a position sufficiently forward so that the pedal is easy to operate, and then angles the seat back 4 in order to increase the distance between his or her upper body and the steering wheel. In such an event, the driver is in a near prone position which is not conducive for safe driving, nor is it comfortable since it tends to create pains in the neck, shoulder or back.

US 2 931 246 discloses a means for increasing leverage in motor vehicle brake pedals, in which an auxiliary pedal bears directly against the brake pedal. As the auxiliary pedal is depressed, its effective lever arm on the brake pedal is increased. Although this might be useful for a brake pedal, it could be quite dangerous for other automobile pedals such as accelerators. There is some modest adjustment possible of the length of the lever arm of the auxiliary pedal. However, the auxiliary pedal is not always closer to the driver, when extended in length-for example, when it is fully depressed. Also, its outward position is limited substantially to that of the existing brake pedal.

Preferred embodiments of the present invention aim to provide a pedal for an automobile whose structure is improved so that a driver, while maintaining a sufficient distance from the steering wheel and dashboard, can drive in the most comfortable and safe position.

According to the present invention, there is provided a pedal for an automobile comprising:
a pedal lever that may be depressed and released by the foot of a driver seated in a driver's compartment of an automobile such that the pedal is moveable away from and towards the driver's seat; and
a pedal plate that extends transversely of the pedal lever:
   wherein:
   said pedal lever comprises two pedal lever members which are provided with respective slots and releasable fastening means such that the positions of the pedal lever members are adjustable with respect to one another in order to adjust the length of the pedal lever away from and towards the driver's seat; and
   said fastening means is manually operable and accessible within the driver's compartment.

Preferably, said pedal lever members are provided with interengaging protrusions to inhibit sliding between the pedal lever members.

In one embodiment of the invention, a plurality of said protrusions are formed at predetermined intervals on a face of one of said pedal lever members;
the other of said pedal lever members is hollow to define a coupling hole to receive said one pedal lever member, and is provided with a further hole communicating with said coupling hole; and
a leaf spring is located in said further hole and is formed with a further said protrusion to engage said protrusions on said one pedal lever member.

Preferably, protrusions are formed on said pedal plate, to inhibit sliding of a driver's foot on said pedal plate.

A pedal as above may further comprise connection means for connecting one of said pedal lever members to an existing pedal plate, such that the first-mentioned pedal plate is an auxiliary pedal plate located at a position that is nearer the driver's seat than said existing pedal plate.

Said connection means may comprise a pair of plates adapted to be secured at opposite faces of an existing pedal plate.

The invention extends to an automobile provided with a pedal according to any of the preceding claims.

For a better understanding of the invention, and to show how embodiments of the same may be carried into effect, reference will now be made, by way of example, to Figures 2 to 9 of the accompanying diagrammatic drawings, in which:
Figure 2 is a schematic exploded perspective view of one example of a pedal for an automobile, in accordance with the present invention;
Figure 3 is an exploded perspective view of another embodiment of a pedal for an automobile, in accordance with the present invention;
Figure 4 is an exploded perspective view of another embodiment of a pedal for an automobile, in accordance with the present invention;
Figure 5 is an exploded perspective view of one embodiment of a pedal-length controller for an automobile, in accordance with the present invention;
Figure 6 is a coupled perspective view of the controller of Figure 5;
Figure 7 is a perspective view of another embodiment of a pedal-length controller for an automobile, in accordance with the present invention;
Figure 8 is a perspective view of a pedal plate of an embodiment of the present invention; and
Figure 9 is an exploded perspective view of still another embodiment of a pedal-length controller for an automobile, in accordance with the present invention.

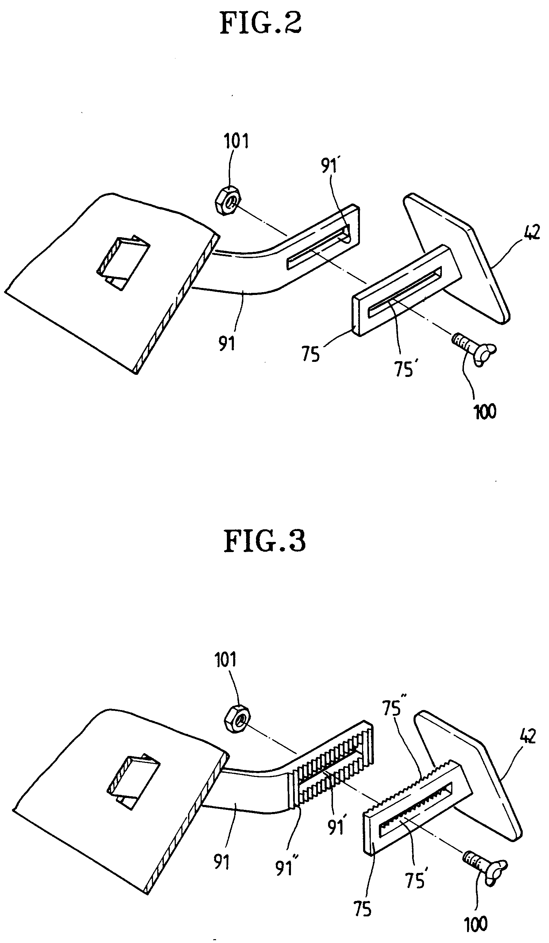

Figure 2 shows a pedal for an automobile, in accordance with an embodiment of the present invention, having a controller for controlling the radius of gyration of a pedal plate 42. The controller is constructed so that a slot 91' is formed on a pedal lever member 91 pivotally mounted on an automobile frame, and an extension lever 75, in which a slot 75' is formed corresponding to slot 91' of pedal lever member 91, is formed on pedal plate 42. Pedal lever member 91 and extension lever 75 are placed so as to oppose each other at a predetermined position, and are fixed together with a fastening member via the slots 91', 75'. Here, the fastening member is comprised of a bolt 100 and a nut 101 coupled to slots 91' and 75', as shown in Figure 2.

In order to prevent extension lever 75 from slipping on pedal lever member 91, as shown in Figure 3, protrusions 91'' and 75'' (for example, in the form of interengaging ribs or teeth) are formed on the contact surfaces of pedal lever member 91 and extension member 75 respectively.

The above-explained pedals have the following operation effects. Extension lever 75 is placed at an appropriate position on pedal lever member 91 and is fixed there by bolt 100 and nut 101 so that the driver can operate pedal plate 42 when the distance between the driver and the steering wheel or dashboard is appropriately controlled according to the leg length of the driver. Under these circumstances, it is easy for the driver to observe the forward and rear areas and convenient to operate the dashboard instrumentation while driving.

As may be seen in Figures 2 and 3, the pedal lever member 91 extends into the driver's compartment where the pedal plate 42 is located. The pedal plate 42 extends transversely of the pedal lever 91, and the bolt 100 and nut 101 are accessible adjacent the pedal plate 42 in the driver's compartment.

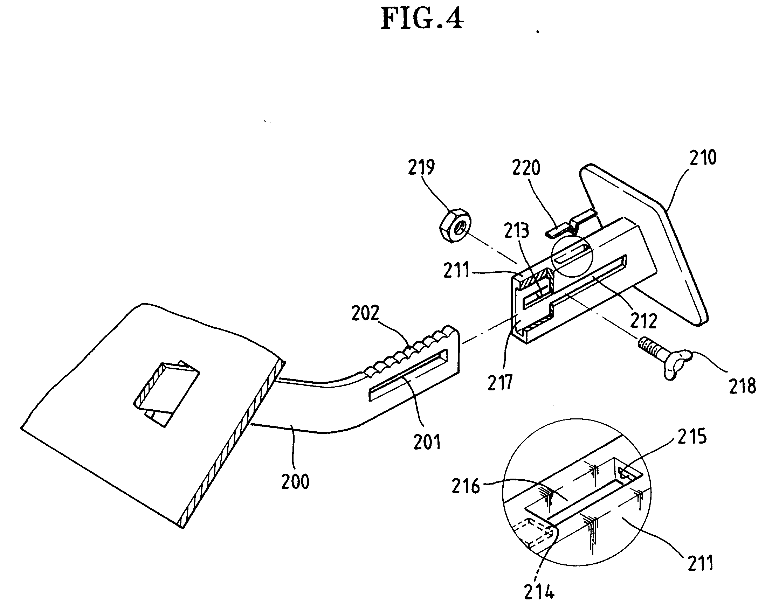

Figure 4 shows another embodiment of pedal controller. Referring to Figure 4, a slot 201 is formed on the side of a pedal lever member 200 rotatably supported to the frame of automobile. A plurality of protrusions 202 are formed on the top of the pedal lever member 200. A hollow lever 211 having a coupling hole 217 to which pedal lever member 200 is connected, extends from a pedal plate 210 which the driver's foot touches. Holes 216, 212 and 213 respectively communicating with coupling hole 217 are formed on the top and either side of pedal lever member 200. A leaf spring 220 resiliently coming into contact with protrusions 202 is coupled to hole 216. Insertion holes 214 and 215 in which the leaf spring 220 engages are formed on opposite end walls of hole 216. In the state in which hollow lever 211 is coupled to fixed pedal lever member 200, when hollow lever 211 moves, leaf spring 220 is elastically displaced while in contact with protrusions 202. Here, hollow lever 211 can stop temporarily at a predetermined position with respect to pedal lever member 200. Therefore, hollow lever 211 can be fastened with bolt 218 and nut 219 in a state in which hollow lever 211 stops stably at a desired position.

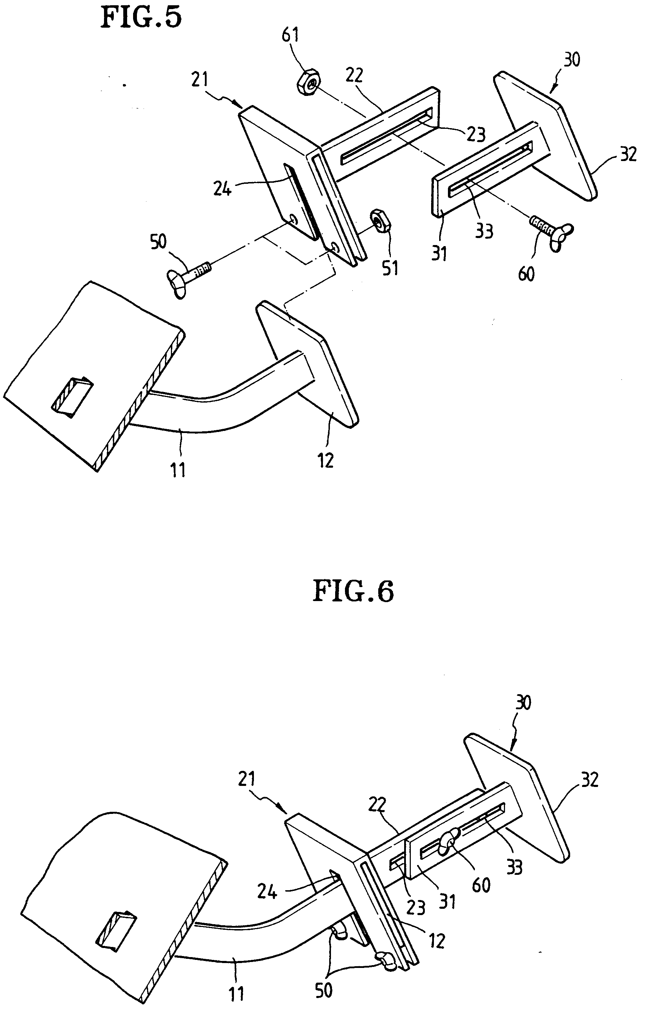

Referring to Figure 5, the pedal-length controller comprises a pedal lever member 11 rotatably supported by the frame of an automobile, a pedal plate 12 fixed thereto, an auxiliary pedal member 30 to be connected to pedal plate 12, and connection means for connecting pedal plate 12 and auxiliary pedal member 30.

The connection means comprises a coupling member 21 for connection to pedal plate 12, and a fastening member such as a bolt 60 and nut 61 for fixing auxiliary pedal member 30 to coupling member 21. A connection lever 22 in which a slot 23 is formed extends coupling member 21. Auxiliary pedal member 30 has a control lever 31 in which a slot 33 is formed corresponding to connection lever 22, and an operation plate 32 fixed to control lever 31.

Here, coupling member 21 is shaped such that pedal plate 12 is received thereinto, as shown in Figure 6. A slit 24 into which pedal lever member 11 is inserted is formed thereon as shown in Figure 6. The coupling member 21 is fixed to pedal plate 12 with bolt 50 and nut 51 as shown in Figures 5 and 6.

The assembling and operation-effect of the above pedal-length controller will now be described.

First, in assembling, connection member 21 is coupled to pedal plate 12 and the coupling is fixed with bolt 50 and nut 51. Control lever 31 of auxiliary pedal member 30 is fastened to connection lever 22 with fastening members 60 and 61. Here, control lever 31 is fixed to a position of connection lever 22 in accordance with the driver's leg length. With the pedal-length controller assembled as above, auxiliary pedal member 30 is fixed at an appropriate position with respect to coupling member 21 in accordance with driver leg length and with the position of the driver's seat adjusted as desired, so that driving can be performed comfortably and safely by adequately maintaining the distance between the driver and the steering wheel or dashboard. Further, the height of auxiliary pedal member 30 can be controlled in accordance with the angle of the driver's legs at which driving is performed most comfortably for a given driver.

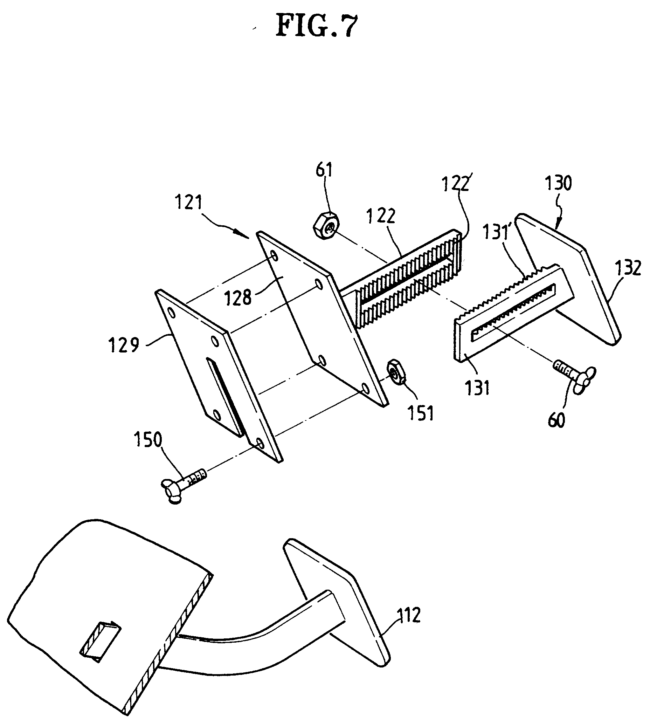

As shown in Figure 7, connection member 121 can be constructed to have a plate 128 fixed to the end of connection lever 122 and an additional auxiliary plate 129 so as to be directly fastened to pedal plate 112 with bolt 150 and nut 151. This two-piece connection member is easier to manufacture than the aforementioned connection member of Figures 4 and 5.

As shown in Figure 7, protrusions 122' and 131' which engage with each other are formed on connection lever 122 and control lever 131 so as to prevent control lever 131 fastened with bolt 60 and nut 61 from sliding on connection lever 122.

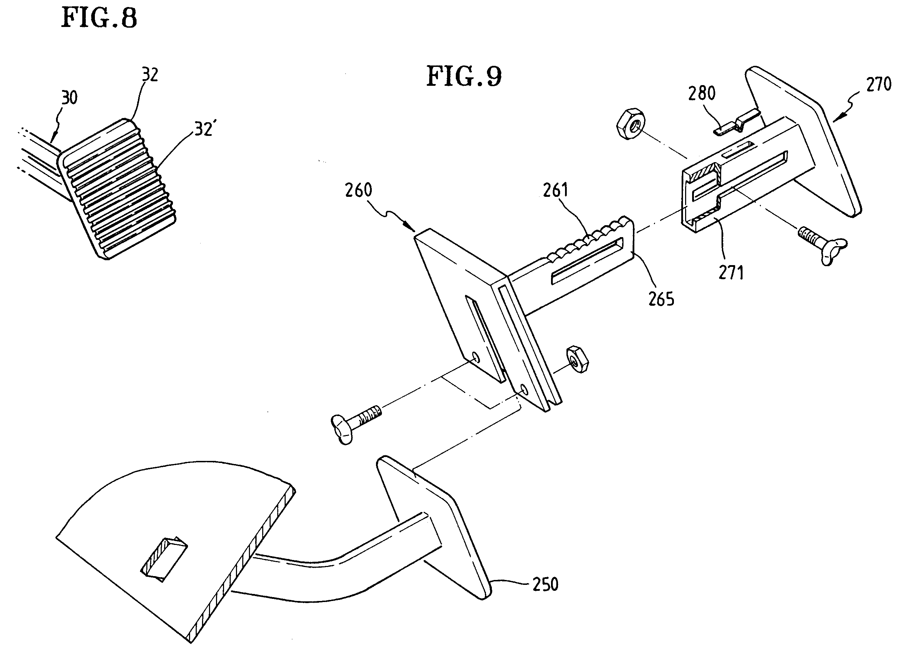

Meanwhile, protrusions 32', as shown in Figure 8, are formed on operation plate 32 of auxiliary pedal member 30 so that when the driver operates operation plate 32, his or her foot does not slide thereon. As before, the abovementioned protrusions may be in the form of ribs or teeth, or any other form.

Figure 9 is an exploded perspective view of another embodiment of pedal-length controller. Reference numeral 260 designates a connection portion coupled to a pedal plate 250. Protrusions 261 are formed on the top of a connection lever 265 extending from connection portion 260. A hollow lever 271 to which connection lever 265 is coupled extends from an auxiliary pedal member 270. A leaf spring 280 in contact with protrusions 261 are coupled to the top of lever 271. This embodiment is similar to that of Figure 4, and similar in operation.

As will be appreciated from the foregoing, in conjunction with the accompanying drawings, in each illustrated embodiment of the invention, the reach of the respective pedal is adjustable by a manually operable means which is accessible within the driver's compartment in which the driver's seat is located.

As described above, embodiments of the present invention may have the following advantages: first, automobile operation can be performed at a position where a driver is able to observe forward and rear areas at the same time, by controlling the radius of gyration of the auxiliary pedal member; second, the radius of gyration of the auxiliary pedal member can be controlled to maintain a predetermined distance between the driver's seat and the dashboard to promote safety and provide convenience in the manipulation the automobile's systems; and third, the radius of gyration of the auxiliary pedal member can be controlled so as to maintain the driver's legs in a comfortable position while driving.

In variations of the invention, embodiments thereof may be adapted for use with pedals having an action other than an angular action about a pivot point. For example, illustrated embodiments of the invention may be adapted for use with pedals having a rectilinear line of action.

All and any of the features disclosed in the foregoing embodiments may be combined in any working combination.

## Claims

1. A pedal (1) for an automobile comprising:
a pedal lever (91) that may be depressed and released by the foot of a driver seated in a driver's compartment of an automobile such that the pedal (1) is moveable away from and towards the driver's seat (3); and
a pedal plate (42) that extends transversely of the pedal lever (91):
characterised in that:
said pedal lever (91) comprises two pedal lever members (91,75) which are provided with respective slots (91',75') and releasable fastening means (100,101) such that the positions of the pedal lever members (91,75) are adjustable with respect to one another in order to adjust the length of the pedal lever (91) away from and towards the driver's seat (3); and
said fastening means (100,101) is manually operable and accessible within the driver's compartment.

2. A pedal according to claim 1, wherein said pedal lever members (91,75) are provided with interengaging protrusions (91'',75'') to inhibit sliding between the pedal lever members (91,75).

3. A pedal according to claim 2, wherein a plurality of said protrusions (202) are formed at predetermined intervals on a face of one of said pedal lever members (200);
the other of said pedal lever members (211) is hollow to define a coupling hole (217) to receive said one pedal lever member (200), and is provided with a further hole (216) communicating with said coupling hole (217); and
a leaf spring (220) is located in said further hole (216) and is formed with a further said protrusion to engage said protrusions (202) on said one pedal lever member (200).

4. A pedal according to claim 1, 2 or 3, wherein protrusions (32') are formed on said pedal plate (32), to inhibit sliding of a driver's foot on said pedal plate.

5. A pedal according to any of the preceding claims, further comprising connection means (21) for connecting one of said pedal lever members (22) to an existing pedal plate (12), such that the first-mentioned pedal plate (32) is an auxiliary pedal plate located at a position that is nearer the driver's seat (3) than said existing pedal plate (12).

6. A pedal according to claim 5, wherein said connection means (21) comprises a pair of plates (128,129) adapted to be secured at opposite faces of an existing pedal plate (12).

7. An automobile provided with a pedal according to any of the preceding claims.

## Patentansprüche

1. Pedal (1) für ein Kraftfahrzeug, das folgendes umfaßt:
einen Pedalhebel (91), den ein im Fahrerraum eines Kraftfahrzeugs sitzender Fahrer mit dem Fuß so herunterdrücken und freigeben kann, daS das Pedal (1) zum Fahrersitz (3) hin und davon weg beweglich ist, und
eine Pedalplatte (42), die sich quer zum Pedalhebel (91) erstreckt;
dadurch gekennzeichnet, daß
der Pedalhebel (91) zwei Pedalhebelglieder (91, 75) umfaßt, die jeweils so mit Schlitzen (91', 75') und lösbaren Befestigungsmitteln (100, 101) versehen sind, daß die Positionen der Pedalhebelglieder (91, 75) bezüglich einander einstellbar sind, um die Länge des Pedalhebels (91) näher zum Fahrersitz (3) hin oder weiter davon weg einzustellen, und
das Befestigungsmittel (100, 101) manuell betätigbar und im Fahrerraum zugänglich ist.

2. Pedal nach Anspruch 1, bei dem die Pedalhebelglieder (91, 75) mit ineinandergreifenden Vorsprüngen (91'', 75'') versehen sind, so daß ein Rutschen zwischen den Pedalhebelgliedern (91, 75) verhindert wird.

3. Pedal nach Anspruch 2, bei dem mehrere der Vorsprünge (202) in vorbestimmten Abständen auf einer Fläche eines der Pedalhebelglieder (200) ausgebildet sind;
das andere Pedalhebelglied (211) hohl ist und so ein Kupplungsloch (217) zur Aufnahme eines Pedalhebelglieds (200) definiert, und mit einem weiteren Loch (216), das mit dem Kupplungsloch (217) in Verbindung steht, ausgebildet ist; und
eine Blattfeder (220) in dem weiteren Loch (216) angeordnet und mit einem weiteren Vorsprung zur Ineingriffnahme der Vorsprünge (202) an dem einen Pedalhebelglied (200) ausgebildet ist.

4. Pedal nach Anspruch 1, 2 oder 3, bei dem Vorsprünge (32') auf der Pedalplatte (32) ausgebildet sind, damit ein Rutschen des Fußes eines Fahrers auf der Pedalplatte verhindert wird.

5. Pedal nach einem der vorhergehenden Ansprüche, weiterhin mit einem Verbindungsmittel (21) zur Verbindung eines der Pedalhebelglieder (22) mit einer bestehenden Pedalplatte (12), so daß die zuerst erwähnte Pedalplatte (32) eine Hilfspedalplatte ist, die sich in einer Position befindet, die näher zum Fahrersitz (3) liegt als die bestehende Pedalplatte (12).

6. Pedal nach Anspruch 5, bei dem das Verbindungsmittel (21) ein Paar Platten (128, 129) umfaßt, die zur Befestigung an gegenüberliegenden Flächen einer bestehenden Pedalplatte (12) ausgeführt sind.

7. Kraftfahrzeug, das mit einem Pedal gemäß einem der vorhergehenden Ansprüche versehen ist.

## Revendications

1. Pédale (1) d'automobile comprenant:
un levier de pédale (91) pouvant être enfoncé et relâché par le pied d'un conducteur assis à la place du conducteur dans une automobile de telle sorte que la pédale (1) soit déplaçable depuis et vers le siège (3) du conducteur; et
un patin de pédale (42) qui s'étend transversalement au levier de pédale (91):
caractérisée en ce que:
ledit levier de pédale (91) comprend deux organes (91, 75) de levier de pédale qui sont pourvus de fentes respectives (91', 75') et de moyens d'attache amovibles (100, 101) de telle sorte que les positions des organes (91, 75) de levier de pédale soient ajustables l'une par rapport à l'autre afin d'ajuster la longueur du levier de pédale (91) pour l'écarter ou l'approcher du siège (3) du conducteur; et
lesdits moyens d'attache (100, 101) peuvent être actionnés manuellement et sont accessibles depuis l'intérieur de la cabine du conducteur.

2. Pédale selon la revendication 1, dans laquelle lesdits organes (91, 75) de levier de pédale sont pourvus de saillies (95'', 75'') s'engageant mutuellement pour empêcher le coulissement entre les organes (91, 75) de levier de pédale.

3. Pédale selon la revendication 2, dans laquelle une pluralité desdites saillies (202) sont formées à des intervalles prédéterminés sur une face de l'un desdits organes (200) de levier de pédale;
l'autre desdits organes (211) de levier de pédale est creux pour définir un trou d'accouplement (217) pour recevoir ledit un organe (200) de levier de pédale, et est pourvu d'un trou supplémentaire (216) communiquant avec ledit trou d'accouplement (217); et
un ressort à lame (220) est situé dans ledit trou supplémentaire (216) et est formé avec une dite saillie supplémentaire pour engager lesdites saillies (202) sur ledit un organe (200) de levier de pédale.

4. Pédale selon la revendication 1, 2 ou 3, dans laquelle des saillies (32') sont formées sur ledit patin de pédale (32), pour empêcher le glissement d'un pied du conducteur sur ledit patin de pédale.

5. Pédale selon l'une quelconque des revendications précédentes, comprenant en outre un moyen de connexion (21) pour connecter l'un desdits organes (22) de levier de pédale à un patin de pédale (12) existant, de sorte que le patin de pédale (32) mentionné en premier soit un patin de pédale auxiliaire situé dans une position qui est plus proche du siège (3) du conducteur que ledit patin de pédale (12) existant.

6. Pédale selon la revendication 5, dans laquelle ledit moyen de connexion (21) comprend une paire de patins (128, 129) adaptés pour être fixés au niveau de faces opposées d'un patin de pédale (12) existant.

7. Automobile pourvue d'une pédale selon l'une quelconque des revendications précédentes.
